# EUROPÄISCHE PATENTANMELDUNG

(11) **EP 4 494 730 A1**
(43) Veröffentlichungstag der Anmeldung: **22.01.2025**
(21) Anmeldenummer: 24181971.3
(22) Anmeldetag: 13.06.2024
(51) Int. Cl.: B01D 35/147, B01D 35/153, B01D 35/30, D06F 39/10

(54) **FILTEREINRICHTUNG FÜR EIN FILTERSYSTEM EINES WÄSCHEBEHANDLUNGSGERÄTS SOWIE FILTERSYSTEM**

(30) Priorität: 19.07.2023 DE 102023206850
(71) Anmelder: BSH Hausgeräte GmbH, 81739 München (DE)
(72) Erfinder: Bischof, Andreas, 10407 Berlin (DE); Eglmeier, Hans, 10587 Berlin (DE)

(57) **Zusammenfassung**

Die Erfindung betrifft eine Filtereinrichtung (10) für ein Filtersystem eines Wäschebehandlungsgeräts, umfassend eine Filteraufnahme (13) und mindestens ein Filterelement (12), welches an der Filteraufnahme (13) in einer Einbauposition lösbar platziert werden kann und einem Filtern von Flüssigkeit dient. Die Filteraufnahme (13) weist mindestens einen Durchgang auf, über welchen bei Platzierung des mindestens einen Filterelements (12) an der Filteraufnahme (13) in der Einbauposition jeweils Flüssigkeit mit dem mindestens einen Filterelement (12) ausgetauscht werden kann. Ein jeweiliger Austausch von Flüssigkeit zwischen dem mindestens einen Durchgang und dem mindestens einen Filterelement (12) erfolgt dabei über je ein zwischenliegendes Ventil (18), welches jeweils untrennbar an der Filteraufnahme (13) befestigt ist. Das je eine Ventil (18) nimmt bei Platzierung des mindestens einen Filterelements (12) in der Einbauposition je einen ersten Schaltzustand ein, in welchem ein Strömen von Flüssigkeit über das je eine Ventil (18) dargestellt werden kann, wohingegen das je eine Ventil (18) bei Entnahme des mindestens einen Filterelements (12) aus der Einbauposition selbsttätig je einen zweiten Schaltzustand einnimmt, in dem ein Strömen von Flüssigkeit über das je eine Ventil (18) unterbunden ist.

## Beschreibung

Die Erfindung betrifft eine Filtereinrichtung für ein Filtersystem eines Wäschebehandlungsgeräts, umfassend eine Filteraufnahme und mindestens ein Filterelement, welches an der Filteraufnahme in einer Einbauposition lösbar platzierbar ist und einem Filtern von Flüssigkeit dient, wobei die Filteraufnahme mindestens einen Durchgang aufweist, über welchen bei Platzierung des mindestens einen Filterelements in der Einbauposition jeweils Flüssigkeit mit dem mindestens einen Filterelement austauschbar ist. Des Weiteren betrifft die Erfindung ein Filtersystem mit einer vorgenannten Filtereinrichtung.

Aufgrund der zunehmenden Belastung der Umwelt mit Mikroplastik werden unterschiedlichste Maßnahmen ergriffen, um Mikroplastik zu reduzieren oder zu vermeiden. Im Bereich moderner Wäschebehandlungsgeräte werden dazu häufig Filtersysteme vorgesehen, über welche bei dem jeweiligen Wäschebehandlungsgerät Mikroplastik aus abzupumpender Prozessflüssigkeit abgeschieden werden kann. Hierdurch kann beim Waschen synthetischer Kleidung eine Belastung des Abwassers mit Mikroplastik reduziert werden.

Die EP 3 839 128 A1 offenbart eine Waschmaschine mit einem Gerätegehäuse und einem Prozessflüssigkeitssystem, welches zum Führen einer Prozessflüssigkeit der Waschmaschine in Form von Wasser bzw. Waschlauge vorgesehen ist. In dem Prozessflüssigkeitssystem ist zudem auch ein Filtersystem mit einer Filtereinrichtung vorgesehen, welche in eine Einspülschale der Waschmaschine integriert und innerhalb des Prozessflüssigkeitssystems dafür vorgesehen ist, synthetische Fasern aus über die Filtereinrichtung geführter Prozessflüssigkeit zu filtern. Bei der Filtereinrichtung ist dabei ein Filterelement in Form eines Aktivkohlefilters vorgesehen, welcher in einer Einbauposition an einer Filteraufnahme der Filtereinrichtung angeordnet und dabei auch aus dieser Einbauposition entnommen werden kann. Die Filteraufnahme ist dabei durch einen Filtergehäuse der Filtereinrichtung gebildet.

Ausgehend vom vorstehend beschriebenen Stand der Technik ist es nun die Aufgabe der vorliegenden Erfindung, eine Filtereinrichtung für ein Filtersystem eines Wäschebehandlungsgeräts zu schaffen, wobei bei dieser Filtereinrichtung permanent eine sachgerechte Verwendung mindestens eines Filterelements sichergestellt ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Filtersystem, bei welchem eine erfindungsgemäße Filtereinrichtung zur Anwendung kommt, ist ferner Gegenstand der Ansprüche 12 bis 15.

Gemäß der Erfindung umfasst eine Filtereinrichtung eine Filteraufnahme und mindestens ein Filterelement, welches an der Filteraufnahme in einer Einbauposition lösbar platziert werden kann und einem Filtern von Flüssigkeit dient. Dabei weist die Filteraufnahme mindestens einen Durchgang auf, über welchen bei Platzierung des mindestens einen Filterelements in der Einbauposition jeweils Flüssigkeit mit dem mindestens einen Filterelement ausgetauscht werden kann.

Die erfindungsgemäße Filtereinrichtung dient einem Filtern von Flüssigkeit, wobei die Filtereinrichtung dabei bevorzugt für die Anwendung bei einem Filtersystem eines Wäschebehandlungsgeräts vorgesehen ist, bei welchem es sich insbesondere um eine Waschmaschine oder einen Waschtrockner handelt. Insbesondere ist die Filtereinrichtung dabei innerhalb des Filtersystems in einem Ablaufsystem des Wäschebehandlungsgeräts angeordnet, über welches ein Abführen von Flüssigkeit aus dem Wäschebehandlungsgerät vorgenommen werden kann. Dabei handelt es sich dann bei der zu filternden Flüssigkeit um Prozessflüssigkeit des Wäschebehandlungsgerät, bevorzugt Wasser oder Waschlauge. Ganz besonders bevorzugt ist die erfindungsgemäße Filtereinrichtung dazu ausgestaltet, synthetische Mikropartikel oder -fasern aus der Flüssigkeit abzuscheiden, wobei es sich bei den Mikropartikeln oder -fasern dann insbesondere um Mikroplastik handelt.

Die Filtereinrichtung verfügt über eine Filteraufnahme, an welcher mindestens ein Filterelement in einer Einbauposition aufgenommen werden kann, wobei dies lösbar erfolgt, d.h. das mindestens eine Filterelement kann von der Filteraufnahme auch aus der Einbauposition entnommen werden, um beispielsweise einen Austausch des mindestens einen Filterelements oder eine Reinigung desselbigen vornehmen zu können. Im Rahmen der Erfindung kann die Filteraufnahme dabei durch ein Filtergehäuse gebildet sein, in welchem das mindestens eine Filterelement aufgenommen und dabei in einem Innenraum des Filtergehäuses liegend in der Einbauposition positioniert werden kann.

Des Weiteren weist die Filteraufnahme mindestens einen Durchgang auf, über welchen Flüssigkeit mit dem mindestens einen Filterelement ausgetauscht werden kann, wenn das mindestens eine Filterelement an der Filteraufnahme in der Einbauposition platziert ist. Bei dem mindestens einen Durchgang handelt es sich dabei insbesondere um eine Öffnung, über welche jeweils ein Austausch der Flüssigkeit mit dem mindestens einen, an der Filteraufnahme aufgenommenen Filterelement erfolgen kann. Konkret kann es sich bei dem mindestens einen Durchgang um je eine Zuführung, über welche jeweils eine Zuleitung von zu filternder Flüssigkeit zu dem mindestens einen Filterelement vorgenommen werden kann, oder auch um je eine Abführung handeln, die einem Abführen von gefilterter Flüssigkeit aus dem mindestens einen Filterelement dient.

Die Filtereinrichtung umfasst für die Filterung der Flüssigkeit mindestens ein Filterelement, wobei hierbei ein oder mehrere Filterelemente vorgesehen sein können, die jeweils für einen Austausch von Flüssigkeit mit der Filteraufnahme im Einzelnen an der Filteraufnahme in einer je zugehörigen Einbauposition zu platzieren sind. Mehrere Filterelemente sind dabei insbesondere in Reihe hintereinanderliegend geschaltet. Besonders bevorzugt weist die Filtereinrichtung aber genau ein Filterelement auf, welches lösbar an der Filteraufnahme angeordnet werden kann. Konkret kann das mindestens eine Filterelement dabei als Filterkartusche gestaltet sein. Insbesondere liegt das mindestens eine Filterelement zudem als Mikrofilter vor, über welchen das Abscheiden von Mikropartikeln oder - fasern und hierbei insbesondere Mikroplastik aus der zu filternden Flüssigkeit vorgenommen werden kann.

Die Erfindung umfasst nun die technische Lehre, dass ein jeweiliger Austausch von Flüssigkeit zwischen dem mindestens einen Durchgang und dem mindestens einen Filterelement über je ein zwischenliegendes Ventil erfolgt, welches jeweils untrennbar an der Filteraufnahme befestigt ist. Das je eine Ventil nimmt bei Platzierung des mindestens einen Filterelements in der Einbauposition je einen ersten Schaltzustand ein, in welchem ein Strömen von Flüssigkeit über das je eine Ventil dargestellt werden kann. Bei Entnahme des mindestens einen Filterelements aus der Einbauposition nimmt das je eine Ventil hingegen selbsttätig je einen zweiten Schaltzustand ein, in dem ein Strömen von Flüssigkeit über das je eine Ventil unterbunden ist.

Mit anderen Worten findet ein jeweiliger Übergang von Flüssigkeit zwischen dem mindestens einen Durchgang der Filteraufnahme und dem mindestens einen Filterelement in der Einbauposition des mindestens einen Filterelements über je ein Ventil statt, welches dazu dann zwischen dem mindestens einen Durchgang und dem mindestens einen Filterelement platziert und nicht lösbar mit der Filteraufnahme verbunden ist. Das je eine Ventil kann zwischen je einem ersten Schaltzustand und je einem zweiten Schaltzustand umgeschaltet werden, wobei der je eine erste Schaltzustand dann bei dem je einen Ventil eingestellt ist, wenn das mindestens eine Filterelements an der Filteraufnahme in der Einbauposition platziert ist. Dabei kann in dem je einen ersten Schaltzustand des je einen Ventils ein Strömen von Flüssigkeit über das je eine Ventil stattfinden und damit auch ein jeweiliger Austausch von Flüssigkeit zwischen dem mindestens einen Durchgang und dem mindestens einen, in der Einbauposition befindlichen Filterelement vollzogen werden. Ist das mindestens eine Filterelement hingegen aus der Einbauposition entnommen, so nimmt das je eine Ventil von selbst den je einen zweiten Schaltzustand ein, in welchem kein Strömen von Flüssigkeit über das je eine Ventil stattfinden kann.

Eine derartige Ausgestaltung einer Filtereinrichtung hat dabei den Vorteil, dass bei Entnahme des mindestens einen Filterelements aus der Einbauposition oder einer unsachgemäßen Anordnung des mindestens einen Filterelements abseits der korrekten Einbauposition ein Führen von Flüssigkeit über die Filtereinrichtung verhindert wird, da sich das je eine Ventil dann selbsttätig in seinem zweiten Schaltzustand befindet. Hierdurch wird eine sachgerechte Verwendung der Filtereinrichtung in Form einer ordnungsgemäßen Platzierung des mindestens einen Filterelements in der Einbauposition erzwungen. So kommt es bei Verwendung der Filtereinrichtung in einem Filtersystem eines Wäschebehandlungsgeräts und hier in einem Ablaufsystem des Wäschebehandlungsgeräts dann beim Abpumpen von Prozessflüssigkeit zu Fehlern, weil das Abpumpen über das dann im zweiten Schaltzustand befindliche Ventil der Filtereinrichtung verhindert wird. Da dann zudem der Laugenbehälter mit Wasser und Wäsche gefüllt ist, kann in das Wäschebehandlungsgerät eingebrachte Wäsche wegen des hohen Wasserstands auch nicht entnommen werden. Somit wird eine Bedienperson des Wäschebehandlungsgerät auf die fehlende Platzierung des mindestens einen Filterelements in der Einbauposition aufmerksam gemacht. Dies lässt sich zudem mit niedrigem Aufwand realisieren.

Im Rahmen der Erfindung könnte aber auch eine zusätzliche Überprüfung einer ordnungsgemäßen Platzierung des mindestens einen Filterelements über einen Sensor und/oder Schalter erfolgen. Alternativ oder ergänzend dazu wäre es auch denkbar, dass die fehlende oder unsachgemäße Platzierung des mindestens einen Filterelements im Rahmen eines Prüfzyklus ermittelt wird. So könnte hierbei beispielsweise eine definierte (kleine) Wassermenge über die Filtereinrichtung geführt werden, um zu prüfen, ob das je eine Ventil offen oder geschlossen ist, also ob das mindestens eine Filterelement ordnungsgemäß in der Einbauposition platziert ist oder nicht. Bei Verwendung der Filtereinrichtung in einem Filtersystem eines Wäschebehandlungsgeräts kann dazu gezielt eine entsprechende Wassermenge eingebracht und abgepumpt werden oder aber eine abzupumpende Wassermenge ist noch aus einer vorhergehenden Wäschebehandlung vorhanden.

Im Rahmen der Erfindung ist unter "untrennbar" zu verstehen, dass die jeweilige Befestigung nicht ohne Werkzeug oder Gewaltanwendung getrennt werden kann, also im Allgemeinen irreversibel ist. Dagegen handelt es sich bei der lösbaren Platzierung des mindestens einen Filterelements an der Filteraufnahme um eine Verbindung, die trennbar ist, also bei Bedarf reversibel getrennt werden kann.

Im Zuge der Platzierung des mindestens einen Filterelements an der Filteraufnahme in der Einbauposition wird insbesondere zudem eine dichte Verbindung zwischen dem mindestens einen Durchgang und dem mindestens einen Filterelement ausgebildet, um bei Platzierung des mindestens einen Filterelements in der Einbauposition eine Leckage von Flüssigkeit an einem Übergang zwischen dem je einen Ventil und dem mindestens einen Filterelement zu vermeiden. Insbesondere ist dazu mindestens ein Dichtelement vorgesehen, welches jeweils seitens des je einen Ventils und/oder seitens des mindestens einen Filterelements angeordnet ist und bei Platzierung des mindestens einen Filterelements in der Einbauposition die Abdichtung vornimmt. Das mindestens eine Dichtelement kann dabei beispielsweise als O-Ring gestaltet sein.

Ferner wird im Zuge der Platzierung des mindestens einen Filterelements in der Einbauposition bevorzugt eine lösbare Befestigung zwischen dem mindestens einen Filterelement und dem je einen, zwischenliegenden Ventil ausgebildet, d.h. das je eine Ventil und das mindestens eine Filterelement werden aneinander lösbar fixiert. Hierbei wird diese lösbare Verbindung insbesondere durch axiales Fixieren des je einen Ventils an dem mindestens einen Filterelement realisiert, wobei das axiale Fixieren bevorzugt durch ein Gewinde, magnetisch, über eine Klemmung, über erhöhte Reibung (z.B. durch einen Gummiring/Gummitülle), über einen Bajonettverschluss, oder über zusätzliche Verbindungselemente wie Schrauben, Klemmen, Spannelemente etc. hergestellt wird.

Dass das je eine Ventil bei Entnahme des mindestens einen Filterelements aus der Einbauposition "selbsttätig" den je einen zweiten Schaltzustand einnimmt, bedeutet im Sinne der Erfindung, dass die Überführung des je einen Ventils in seinen je einen zweiten Schaltzustand bei der Trennung von selbst auftritt, also nicht aktiv durch eine Steuerung oder Regelung und eine entsprechende Aktuatorik herbeizuführen ist. Insbesondere ist das je eine Ventil in seinen je einen zweiten Schaltzustand vorgespannt, wobei diese Vorspannung dann bei Platzierung des mindestens einen Filterelements in der Einbauposition überwunden wird. Besonders bevorzugt wird die Vorspannung in den je einen zweiten Schaltzustand dabei über ein Federelement realisiert.

Entsprechend einer Ausführungsform der Erfindung ist dem je einen Ventil jeweils ein Auslöseelement zugeordnet, welches an dem mindestens einen Filterelement vorgesehen ist. Das jeweils ein Auslöseelement tritt bei Platzierung des mindestens einen Filterelements in der Einbauposition mit dem je einen Ventil in Kontakt und überführt das je eine Ventil dabei aus dem je einen zweiten Schaltzustand in den je einen ersten Schaltzustand. Hierdurch kann auf einfache Art und Weise die Überführung des je einen Ventils in den je einen ersten Schaltzustand bei Platzierung des mindestens einen Filterelements in der Einbauposition realisiert werden. Hierbei kann das jeweils eine Auslöseelement vertikal oder horizontal oder schräg auf das je eine Ventil einwirken. Das jeweils eine Auslöseelement ist hierbei bevorzugt durch das mindestens eine Filterelement selbst oder durch ein hieran befestigtes Bauteil gebildet und somit insbesondere feststehend.

Neben dem rein mechanischen Öffnen des je einen Ventils durch das jeweils eine Auslöseelement kann im Rahmen der Erfindung aber auch zusätzlich ein elektrischer Schalter und/oder Sensor vorgesehen sein, um zum Beispiel Signale an eine Bedienperson und/oder ein die Filtereinrichtung aufweisendes Wäschebehandlungsgerät zu senden und damit die ordnungsgemäße oder fehlende Platzierung des mindestens einen Filterelements in der Einbauposition aufzuzeigen.

Das je eine Ventil und das zugehörige Auslöseelement können im Rahmen der Erfindung jeweils einen speziellen Querschnitt oder jeweils eine spezielle Kontur aufweisen, so dass das je eine Ventil nur mit dem entsprechend gestalteten Gegenstück in Form des zugehörigen Auslöseelements und umgekehrt nutzbar ist.

In Weiterbildung der vorgenannten Ausführungsform weist das je eine Ventil jeweils einen Ventilkörper auf, welcher zwischen je einer ersten, dem je einen ersten Schaltzustand zugeordneten Stellung und je einer zweiten, dem je einen zweiten Schaltzustand zugeordneten Stellung bewegt werden kann. Der jeweils eine Ventilkörper unterbindet in der zweiten Stellung das Strömen von Flüssigkeit über das je eine Ventil, während in der je einen ersten Stellung des jeweils einen Ventilkörpers das Strömen von Flüssigkeit über das je eine Ventil dargestellt werden kann. Hierdurch wird ein geeigneter Aufbau des je einen Ventils realisiert. Eine Positionierung des jeweils einen Ventilkörpers in der zweiten Stellung kann dabei über ein Federelement oder auch mittels eines Magneten verwirklicht bzw. unterstützt sein, welcher den jeweils einen Ventilkörper in der zweiten Stellung hält. Besonders bevorzugt liegt der jeweils eine Ventilkörper in der zweiten Stellung an jeweils einem zugehörigen Ventilsitz an und unterbindet dadurch das Strömen von Flüssigkeit über das je eine Ventil. In der je einen ersten Stellung ist der jeweils eine Ventilkörper dann aus dem jeweils einen zugehörigen Ventilsitz herausbewegt, wodurch das Strömen von Flüssigkeit über das je eine Ventil dargestellt werden kann.

Bevorzugt kann der jeweils eine Ventilkörper in Strömungsrichtung von über das je eine Ventil geführter Flüssigkeit zwischen der je einen ersten Stellung und der je einen zweiten Stellung bewegt werden. Dies ermöglicht einen kompakten Aufbau des je einen Ventils.

Alternativ dazu liegt die je eine erste Stellung des jeweils einen Ventilkörpers hinsichtlich einer Strömungsrichtung von über das je eine Ventil geführter Flüssigkeit seitlich versetzt zu der je einen zweiten Stellung. Hierdurch kann ein Ventil verwirklicht werden, welches unempfindlicher gegenüber in der Flüssigkeit vorhandenen Verschmutzungen, wie beispielsweise Flusen, ist, da durch die somit seitliche Positionierung des Ventilkörpers in der ersten Stellung beim Strömen von Flüssigkeit über das je eine Ventil weniger Verschmutzungen an dem Ventilkörper hängen bleiben können.

Weiter alternativ ist der jeweils eine Ventilkörper je ein Ventilschieber, welcher quer zu einer Strömungsrichtung von über das mindestens eine Ventil geführter Prozessflüssigkeit zwischen der je einen ersten Stellung und der je einen zweiten Stellung verschiebbar ist. Über einen Ventilschieber kann dabei ein zuverlässiges Verschließen in der je einen zweiten Stellung realisiert werden.

Es ist eine alternative Weiterbildung der Ausführungsform, dass das je eine Ventil jeweils einen Ventilkörper aufweist, der mit je einem Durchbruch durchsetzt ist, wobei der jeweils eine Ventilkörper zwischen je einer ersten, dem je einen ersten Schaltzustand zugeordneten Stellung und je einer zweiten, dem je einen zweiten Schaltzustand zugeordneten Stellung verdrehbar ist. Der jeweils eine Ventilkörper trennt in der je einen zweiten Stellung einen Zulauf und einen Ablauf des je einen Ventils voneinander und unterbindet hierdurch das Strömen von Flüssigkeit über das je eine Ventil, wohingegen der je eine Durchbruch des jeweils einen Ventilkörpers in der je einen ersten Stellung mit dem Zulauf und dem Ablauf in Überdeckung gebracht ist und dadurch das Strömen von Flüssigkeit über das je eine Ventil dargestellt werden kann.

Weiter alternativ weist das je eine Ventil jeweils einen Ventilkolben auf, der zwischen je einer ersten, dem je einen ersten Schaltzustand zugeordneten Stellung und je einer zweiten, dem je einen zweiten Schaltzustand zugeordneten Stellung verschoben werden kann, wobei der jeweils eine Ventilkolben in der je einen zweiten Stellung auf je ein elastisches Element des je einen Ventils drückt, welches sich dadurch elastisch verformt. Das je ein elastisches Element trennt in dem verformten Zustand einen Zulauf und einen Ablauf des je einen Ventils voneinander und unterbindet hierdurch das Strömen von Flüssigkeit über das je eine Ventil, wohingegen der Zulauf und der Ablauf in einem unverformten Zustand des je einen elastischen Elements miteinander verbunden sind und dadurch das Strömen von Flüssigkeit über das je eine Ventil darstellbar ist. Hierdurch kann ein sogenanntes Quetschventil (pinch valve) realisiert werden. Der gedrückte Zustand des elastischen Elements kann direkt mechanisch oder auch mittels eines Mediums (z.B. eines Fluides) erfolgen.

Gemäß einer Ausgestaltungsmöglichkeit der Erfindung ist der mindestens eine Durchgang je eine Zuführung, über welche dem mindestens einen Filterelement zu filternde Flüssigkeit über das je eine zwischenliegende Ventil zuführbar ist. Alternativ oder auch ergänzend dazu ist der mindestens eine Durchgang je eine Abführung, über welche von dem mindestens einen Filterelement gefilterte Flüssigkeit über das je eine zwischenliegende Ventil abführbar ist.

Bei einer Variante der Erfindung sind die beiden vorgenannten Ausgestaltungsmöglichkeiten dann miteinander kombiniert, so dass an der Filteraufnahme sowohl an der je einen Zuführung, als auch an der je einen Abführung jeweils je ein Ventil untrennbar befestigt ist. Bevorzugt sind dann zudem auch seitens des mindestens einen Filterelements zwei weitere Ventile vorgesehen, wobei diese dabei an Anschlusspunkten des mindestens einen Filterelements angeordnet sind, an denen das mindestens eine Filterelement mit der Zuführung und mit der Abführung in der Einbauposition jeweils verbunden ist. Hierdurch kann bei Entnahme des mindestens einen Filterelements ein Auslaufen von Flüssigkeit auf zuverlässige Weise verhindert werden.

Die erfindungsgemäße Filtereinrichtung ist insbesondere Teil eines Filtersystems eines Wäschebehandlungsgeräts, wobei die Filtereinrichtung dabei in einem Ablaufsystem angeordnet ist, über welches Prozessflüssigkeit aus dem Wäschebehandlungsgerät abgeführt werden kann. In vorteilhafter Weise kann hierdurch über die Filtereinrichtung ein Filtern von aus dem Wäschebehandlungsgerät abzuführender Prozessflüssigkeit realisiert werden, wobei dabei eine sachgerechte Verwendung des mindestens einen Filterelements der Filtereinrichtung sichergestellt wird.

In Weiterbildung der Erfindung ist die Filtereinrichtung in einem Gerätegehäuse des Wäschebehandlungsgeräts aufgenommen, wobei die Filtereinrichtung dabei an oder in einer Einspülschale des Wäschebehandlungsgeräts aufgenommen sein kann. Alternativ dazu ist die Filtereinrichtung außenliegend zu einem Gerätegehäuse des Wäschebehandlungsgeräts angeordnet.

Vorteilhafte Ausführungsformen der Erfindung, die nachfolgend erläutert werden, sind in den Zeichnungen dargestellt. Es zeigt:
- Fig. 1: eine schematische Ansicht eines Wäschebehandlungsgerät mit einem Filtersystem gemäß einer ersten Ausführungsform der Erfindung;
- Fig. 2 bis 4: unterschiedliche Ansichten des Filtersystems aus Fig. 1 im Bereich einer Filtereinrichtung;
- Fig. 5: eine schematische Darstellung eines Wäschebehandlungsgerät mit einem Filtersystem entsprechend einer zweiten Ausgestaltungsmöglichkeit der Erfindung; und
- Fig. 6 bis 11: schematische Ansichten weiterer möglicher Ausgestaltungen einer Filtereinrichtung zur Anwendung bei dem Filtersystem des Wäschebehandlungsgeräts aus Fig. 1 oder aus Fig. 5.

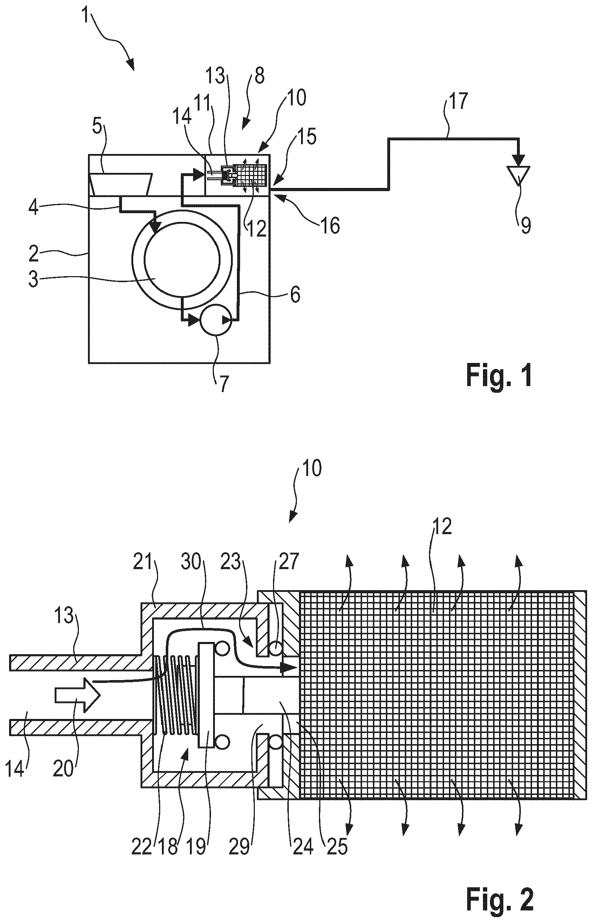

Aus Fig. 1 geht eine schematische Ansicht eines Wäschebehandlungsgeräts 1 hervor, bei welchem es sich vorliegend um eine Waschmaschine oder einen Waschtrockner handelt. Das Wäschebehandlungsgerät 1 umfasst ein Gerätegehäuse 2, in welchem eine Trommel 3 drehbar gelagert aufgenommen ist. Die Trommel 3 dient bei dem Wäschebehandlungsgerät 1 der Aufnahme von zu behandelnden Wäschestücken, wobei der Trommel 3 für eine Behandlung eingebrachter Wäschestücke Prozessflüssigkeit über eine Zulaufleitung 4 zugeleitet werden kann. Dazu ist über die Zulaufleitung 4 eine Verbindung der Trommel 3 zu einer Einspülschale 5 hergestellt, in welcher zugeführtes Wasser mit Waschmittel oder Waschhilfsmittel versetzt werden kann, bevor über die Zulaufleitung 4 eine Zuführung der somit gebildeten Prozessflüssigkeit zu der Trommel 3 erfolgt. Insofern kann es sich bei der der Trommel 3 zugeführten Prozessflüssigkeit neben Wasser auch insbesondere um Waschlauge handeln.

Zum Ende eines Prozessschritts bzw. der Wäschebehandlung kann die Prozessflüssigkeit aus der Trommel 3 abgeführt werden, wobei dieses Abführen dabei über eine Ablaufleitung 6 stattfindet, indem die Prozessflüssigkeit aus der Trommel 4 über eine Pumpe 7 angesaugt und in die Ablaufleitung 6 gefördert wird. Die Ablaufleitung 6 dient dabei der Zuführung der abgepumpten Prozessflüssigkeit zu einem Filtersystem 8, in welchem ein Filtern der abgepumpten Prozessflüssigkeit realisiert werden kann, bevor die Prozessflüssigkeit im Weiteren einem Abwasseranschluss 9 eines Abwassersystems zugeführt wird.

Das Filtersystem 8 ist hierbei entsprechend einer ersten Ausführungsform der Erfindung gestaltet und umfasst eine Filtereinrichtung 10, die in das Gerätegehäuse 2 des Wäschebehandlungsgeräts 1 integriert ist. Dazu bildet das Gerätegehäuse 2 im Bereich der Einspülschale 5 ein Filtergehäuse 11 aus, welches der Aufnahme eines Filterelements 12 dient. Dabei definiert das Filtergehäuse 11 eine Filteraufnahme 13, an welcher das Filterelement 12 in einer Einbauposition lösbar platziert werden kann. Das Filtergehäuse 11 weist zudem eine Zuführung 14 auf, über welche dem Filterelement 12 die zu filternde Prozessflüssigkeit aus der Ablaufleitung 6 zugeführt werden kann. Außerdem ist das Filtergehäuse 11 noch mit einer Abführung 15 versehen, über welche die über das Filterelement 12 gefilterte Prozessflüssigkeit aus dem Filtergehäuse 11 herausgeleitet werden kann. Dabei ist die Abführung 15 durch einen Ablaufanschluss 16 des Gerätegehäuses 2 gebildet. An dem Ablaufanschluss 16 ist dabei ein Ablaufschlauch 17 angeschlossen, über welchen die gefilterte Prozessflüssigkeit im Weiteren dem Abwasseranschluss 9 zugeführt werden kann.

Bei dem Filterelement 12 der Filtereinrichtung 10 handelt es sich vorliegend um einen Mikrofilter, über welchen Mikropartikel und hierbei insbesondere Mikroplastik aus der zugeführten Prozessflüssigkeit abgeschieden werden können. Das Filterelement 12 ist dabei zudem als Filterkartusche gestaltet, die aus der Einbauposition an der Filteraufnahme 13 entnommen werden kann, um beispielsweise ein Reinigen des Filterelements 12 oder auch einen Austausch desselbigen zu realisieren, sowie nach dem Reinigen bzw. dem Austausch wieder in der Einbauposition an der Filteraufnahme 13 platzierbar ist.

Die Filtereinrichtung 10 ist nun näher im Detail in Fig. 2 dargestellt, wobei die Filtereinrichtung 10 dabei bei Platzierung des Filterelements 12 in der Einbauposition an der Filteraufnahme 13 gezeigt ist. Wie hierbei zu erkennen ist, findet ein Zuströmen der zu filternden Prozessflüssigkeit zu dem Filterelement 12 hierbei über ein zwischenliegendes Ventil 18 statt, welches untrennbar an der Filteraufnahme 13 und damit auf Seiten der Zuführung 14 befestigt ist. Das Ventil 18 umfasst einen stopfenförmigen Ventilkörper 19, welcher in einer Strömungsrichtung 20 der Prozessflüssigkeit zwischen unterschiedlichen Stellungen in einem Ventilgehäuse 21 bewegt werden kann. Das Ventilgehäuse 21 ist dabei durch die Filteraufnahme 13 ausgestaltet. Der Ventilkörper 19 ist über ein Federelement 22 in Richtung eines Ventilsitzes 23 vorgespannt, der an dem Ventilgehäuse 21 definiert ist.

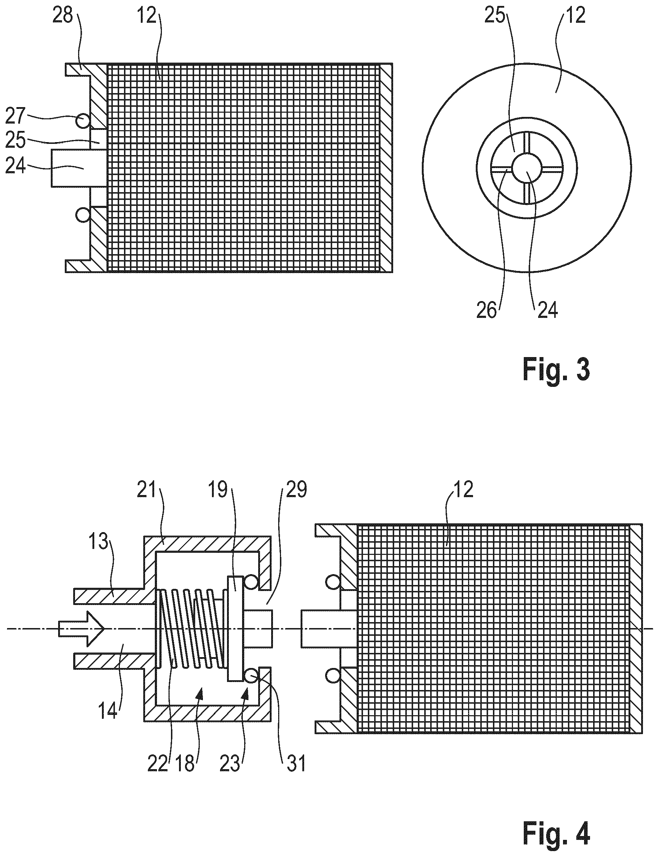

Seitens des Filterelements 12 ist zudem ein Auslöseelement 24 ausgestaltet, welches stiftähnlich ausgebildet ist und hierbei axial gegenüber dem restlichen Filterelement 12 vorsteht. Wie insbesondere aus den Darstellungen in Fig. 3 zu erkennen ist, in welcher links eine Schnittansicht sowie rechts eine Stirnansicht des Filterelements 12 dargestellt ist, liegt das Auslöseelement 24 dabei in einer Zufuhröffnung 25 des als Filterkartusche gestalteten Filterelements 12 und ist über radial verlaufende Stege 26 an dem restlichen Filterelement 12 angebunden. Im Bereich einer Mündung der Zufuhröffnung 25 ist zudem ein Dichtelement 27 in Form eines O-Ringes an dem Filterelement 12 aufgenommen, wobei das Filterelement 12 zudem einen axial vorstehenden, umlaufenden Flansch 28 bildet, mit welchem das Ventilgehäuse 21 beim Platzieren des Filterelements 12 in der Einbauposition für eine lösbare Befestigung umgriffen werden kann. Hierbei kann diese lösbare Befestigung durch ein Gewinde, magnetisch, über eine Klemmung, über erhöhte Reibung (z.B. durch einen Gummiring/Gummitülle), über einen Bajonettverschluss oder über zusätzliche Verbindungselemente wie Schrauben, Klemmen, Spannelemente etc. hergestellt sein.

In Fig. 2 ist das Filterelement 12 bei Platzierung in der Einbauposition an der Filteraufnahme 13 gezeigt. Wie hierbei zu erkennen ist, ist der Ventilkörper 19 des Ventils 18 über das Auslöseelement 24 dabei in eine in Fig. 2 gezeigte, erste Stellung bewegt, in welcher ein erster Schaltzustand des Ventils 18 realisiert ist. In dieser ersten Stellung und damit dem ersten Schaltzustand des Ventils 18 ist der Ventilkörper 19 axial aus dem Ventilsitz 23 gehoben, wodurch durch den Ventilkörper 19 ein Ablauf 29 freigegeben ist, der stirnseitig der Filteraufnahme 13 und radial innen zu dem Ventilsitz 23 ausgebildet ist. Hierdurch wird ein Strömen von Prozessflüssigkeit über das Ventil 18 ermöglicht, so dass Prozessflüssigkeit aus der Zuführung 14 über das Ventil 18 in die Zufuhröffnung 25 und damit in das Filterelement 12 einströmen kann. Dies ist in Fig. 2 mit einem Pfeil 30 angedeutet.

Ist das Filterelement 12 hingegen aus der Einbauposition entnommen oder nicht korrekt in dieser an der Filteraufnahme 13 platziert, so wird ein Strömen von Prozessflüssigkeit über das Ventil 18 unterbunden. Dieser Zustand ist dabei in Fig. 4 dargestellt, welche eine zweite Stellung des Ventilkörpers 19 und eine dieser zugeordneten, zweite Schaltstellung des Ventils 18 zeigt. In der zweiten Stellung ist der Ventilkörper 19 über das Federelement 22 in den Ventilsitz 23 gedrückt, wobei der Ablauf 29 dabei zu dem Filterelement 12 hin über ein Dichtelement 31 abgedichtet wird, welches am Ventilkörper 19 aufgenommen ist. Bei dem Dichtelement 31 handelt es sich dabei um einen O-Ring. Insofern hat die Entnahme des Filterelements 12 aus der Einbauposition zur Folge, dass kein Ablaufen von Prozessflüssigkeit über die Zuführung 14 erfolgen kann, da diese endseitig über das Ventil 18 verschlossen ist. Insbesondere wird dieses somit nicht mögliche Abführen von Prozessflüssigkeit aus der Trommel 3 seitens des Wäschebehandlungsgerät 1 als Fehler deklariert.

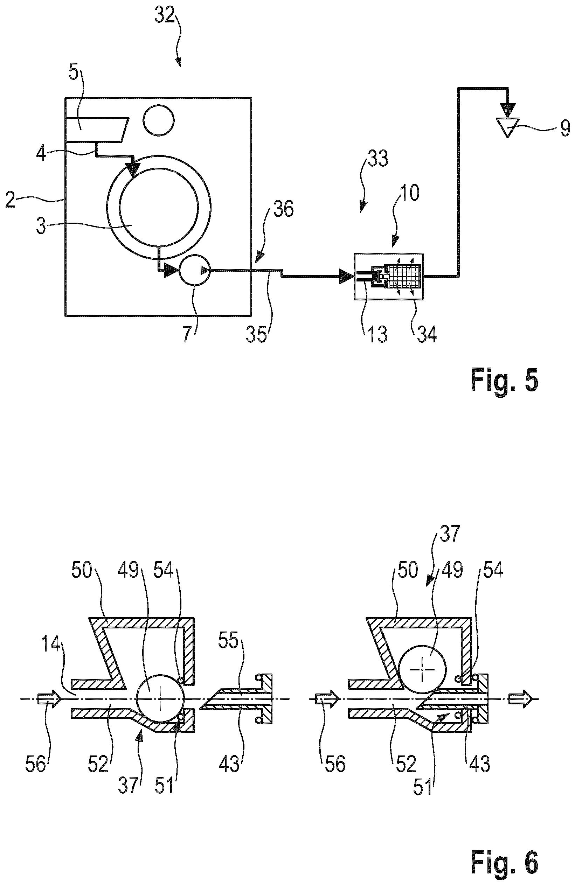

Des Weiteren zeigt Fig. 5 eine schematische Darstellung eines Wäschebehandlungsgeräts 32 mit einem Filtersystem 33 entsprechend einer zweiten Ausgestaltungsmöglichkeit der Erfindung, wobei das Filtersystem 33 und auch das Wäschebehandlungsgerät 32 hierbei im Wesentlichen der Variante nach den Fig. 1 bis 4 entspricht. Unterschiedlich ist nun, dass die Filtereinrichtung 10 des Filtersystems 33 nun nicht in das Gerätegehäuse 2 des Wäschebehandlungsgerät 32 integriert ist, sondern außenliegend zu dem Gerätegehäuse 2 angeordnet ist. Dadurch wird dann auch die Filteraufnahme 13 der Filtereinrichtung 10 nicht durch das Gerätegehäuse 2, sondern stattdessen durch ein separates Filtergehäuse 34 gebildet. Für eine Verbindung mit der Pumpe 7 verläuft eine Ablaufleitung 35 teilweise innerhalb des Gerätegehäuses 2 sowie teilweise außerhalb desselbigen, wobei die Ablaufleitung 35 hierbei insbesondere im Bereich eines Ablaufanschlusses 36 am Gerätegehäuse 2 geteilt ist. Ansonsten entspricht die Ausgestaltungsmöglichkeit nach Fig. 5 der Variante nach den Fig. 1 bis 4, so dass auf das hierzu Beschriebene Bezug genommen wird.

Schließlich gehen noch aus den Fig. 6 bis 11 weitere Varianten von Ventilen 37, 38, 39, 40, 41 und 42 sowie von zugehörigen Auslöseelementen 43, 44, 45, 46, 47 und 48 hervor, wobei das einzelne Ventil 37 bzw. 38 bzw. 39 bzw. 40 bzw. 41 bzw. 42 gemeinsam mit dem je zugehörigen Auslöseelement 43 bzw. 44 bzw. 45 bzw. 46 bzw. 47 bzw. 48 alternativ zu dem Ventil 18 und dem Auslöseelement 24 jeweils bei den Varianten nach den Fig. 1 bis 5 zur Anwendung kommen kann.

So umfasst das in Fig. 6 gezeigte Ventil 37 einen Ventilkörper 49 in Form einer Ventilkugel, welche in einem Ventilgehäuse 50 beweglich aufgenommen ist. In einer, in der linken Darstellung in Fig. 6 gezeigten Schaltstellung des Ventils 37 befindet sich der Ventilkörper 49 in einer Stellung, in welcher der Ventilkörper 49 an einem Ventilsitz 51 anliegt. Dabei wird der Ventilkörper 49 unter Einfluss der Schwerkraft sowie, bei Einströmen von Prozessflüssigkeit in das Ventilgehäuse 50 an einem Zulauf 52 des Ventils 37, unter Einfluss eines Drucks der einströmenden Prozessflüssigkeit in den Ventilsitz 51 gedrückt. Der Zulauf 52 steht dabei mit der Zuführung 14 in Verbindung. Der Ventilkörper 49 sorgt hierbei für ein Verschließen eines Ablaufs 53 und unterbindet somit ein Strömen der Prozessflüssigkeit über das Ventil 37. Am Ventilsitz 51 ist dabei ferner ein Dichtelement 54 vorgesehen, welches beim Verschließen des Ablaufs 53 durch den Ventilkörper 49 zusätzlich für eine Abdichtung sorgt.

Das zugehörige Auslöseelement 43 bildet eine Zufuhröffnung 55, über welche Prozessflüssigkeit im Weiteren dann dem - vorliegend nicht dargestellten - Filterelement zugeleitet werden kann, das mit dem Auslöseelement 43 fest verbunden ist. Wie in der rechten Darstellung in Fig. 6 zu erkennen ist, kann das Ventil 37 in eine andere Schaltstellung überführt werden, indem das Auslöseelement 43 in den Ablauf 53 axial eingeführt und dadurch mit einer Anschrägung den Ventilkörper 49 aus dem Ventilsitz 51 heraus in eine andere Stellung überführt. In dieser anderen Stellung wird dadurch ein Strömen von Prozessflüssigkeit über das Ventil 37 ermöglicht, wobei die andere Stellung dabei hinsichtlich einer Strömungsrichtung 56 der Prozessflüssigkeit quer versetzt zu der Stellung des Ventilkörper 49 der linken Darstellung liegt. Zudem ist noch seitens des Auslöseelements 43 ein weiteres Dichtelement 57 in Form eines O-Ringes vorgesehen, um beim Einströmen von Prozessflüssigkeit in die Zufuhröffnung 55 eine entsprechende Abdichtung zu realisieren.

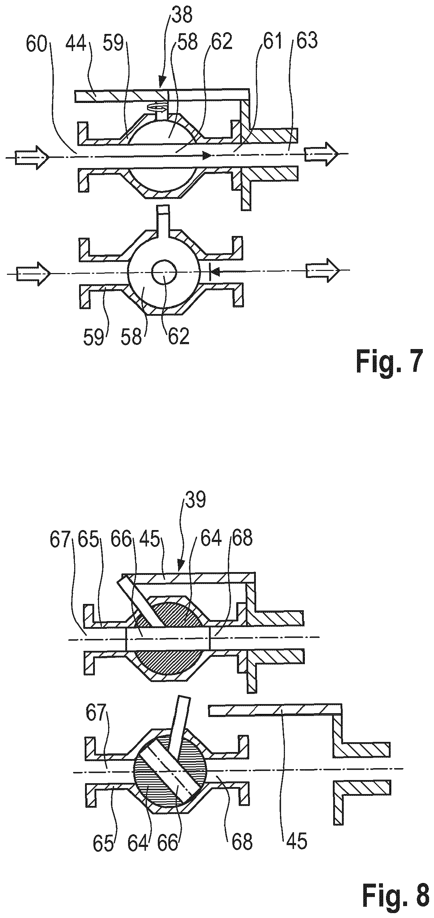

Bei dem in Fig. 7 gezeigten Ventil 38 ist ein kugelförmiger Ventilkörper 58 drehbar in einem Ventilgehäuse 59 geführt, welches einen Zulauf 60 und einen Ablauf 61 aufweist. Der Ventilkörper 58 ist mit einem Durchbruch 62 durchsetzt. Wird der Ventilkörper 58 im Ventilgehäuse 59 unter Einwirkung des Auslöseelements 44 in eine erste Stellung verdreht, die eine erste Schaltstellung des Ventils 38 verwirklicht und in Fig. 7 in der oberen Darstellung gezeigt ist, so überdeckt der Durchbruch 62 mit dem Zulauf 60 und dem Ablauf 61, wodurch Prozessflüssigkeit über das Ventil 38 zu einer Zufuhröffnung 63 strömen kann, welche seitens des - vorliegend ebenfalls nicht gezeigten - Filterelements ausgestaltet ist. Ohne Einwirkung des Auslöseelements 44 ist der Ventilkörper 58 hingegen im Ventilgehäuse 59 selbsttätig in eine zweite Stellung verdreht, die eine zweite Schaltstellung des Ventils 38 darstellt und in welcher keine Überdeckung des Durchbruchs 62 mit dem Zulauf 60 und dem Ablauf 61 besteht. Dadurch kann in dieser zweiten Schaltstellung des Ventils 38 kein Strömen von Prozessflüssigkeit über das Ventil 38 stattfinden.

Der in Fig. 8 gezeigte Aufbau ist hierbei ähnlich zu der Variante nach Fig. 7 gestaltet, mit dem Unterschied, dass der gezeigte, kugelförmige Ventilkörper 64 des Ventils 39 in dem umliegenden Ventilgehäuse 65 Schwenkbewegungen zwischen zwei Stellungen ausführen kann. In einer ersten Stellung des Ventilkörpers 64, die in der oberen Darstellung in Fig. 8 gezeigt ist und eine erste Schaltstellung des Ventils 39 darstellt, ist auch hierbei ein Durchbruch 66 im Ventilkörper 64 in Überdeckung mit einem Zulauf 67 und einem Ablauf 68 des Ventilgehäuses 65 gebracht, wodurch Prozessflüssigkeit über das Ventil 39 strömen kann. Dabei wird der Ventilkörper 64 unter Einwirkung des zugehörigen Auslöseelements 45 in diese erste Stellung verschwenkt und dadurch ein Strömen der Prozessflüssigkeit aus dem Ablauf 68 in eine Zufuhröffnung 69 des das Auslöseelement 43 aufweisenden Filterelements ermöglicht, während der Ventilkörper 64 ohne Einwirkung des zugehörigen Auslöseelement 45 in eine zweite Stellung verschwenkt ist, die in Fig. 8 in der unteren Darstellung gezeigt ist. In dieser zweiten Stellung, welche eine zweite Schaltstellung des Ventils 39 repräsentiert, überdeckt der Durchbruch 66 dann nicht mehr mit dem Zulauf 67 und dem Ablauf 68, so dass auch keine Prozessflüssigkeit mehr über das Ventil 39 strömen kann.

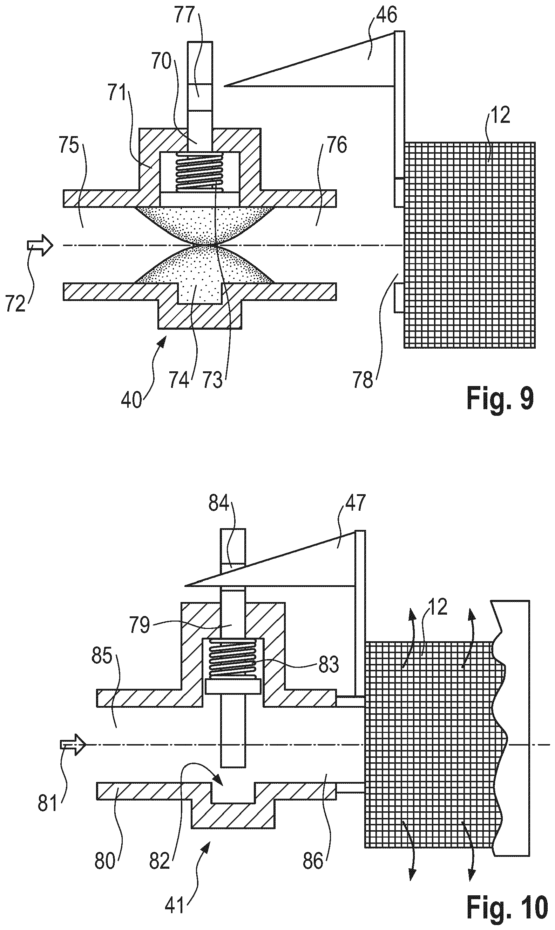

Hingegen weist das in Fig. 9 dargestellte Ventil 40 einen Ventilkolben 70 auf, der in einem Ventilgehäuse 71 quer zu einer Strömungsrichtung 72 von über das Ventil 40 führbarer Prozessflüssigkeit verschiebbar geführt ist. Der Ventilkolben 70 ist über ein Federelement 73 in eine in Fig. 9 gezeigte Stellung vorgespannt, in welcher der Ventilkolben 70 auf ein elastisches Element 74 drückt und dieses dadurch elastisch verformt. Dadurch wird eine Schaltstellung des Ventils 40 dargestellt. In seinem verformten Zustand trennt das elastische Element 74 einen Zulauf 75 von einem Ablauf 76, die durch das Ventilgehäuse 71 des Ventils 40 gebildet sind und von denen der Zulauf 75 im Weiteren mit der - vorliegend nicht gezeigten - Zuführung in Verbindung steht. Somit wird im verformten Zustand des elastischen Element 74 wird ein Strömen von Prozessflüssigkeit über das Ventil 40 unterbunden.

Das dem Ventil 40 zugeordnete Auslöseelement 46 ist als angeschrägter Schiebesitz gestaltet und wird Platzierung des Filterelements in der Einbauposition in eine Betätigungsöffnung 77 des Ventilkolben 70 eingeführt, was aufgrund der Anschrägung des Auslöseelements 46 ein Verschieben des Ventilkolben 70 entgegen dem Federelement 73 in eine andere Stellung zur Folge hat, in welcher der Ventilkolben 70 nicht mehr auf das elastische Element 74 einwirkt. Dadurch kehrt das elastische Element 74 in der anderen Stellung des Ventilkolbens 70 in einen unverformten Zustand zurück, in welcher ein Strömen von Prozessflüssigkeit zwischen dem Zulauf 75 und dem Ablauf 76 und damit auch im Weiteren auch ein Zuströmen in eine Zufuhröffnung 78 des Filterelements 12 ermöglicht wird. Hierdurch wird eine andere Schaltstellung des Ventils 40 verwirklicht.

Des Weiteren ist bei dem in Fig. 10 gezeigten Ventil 41 ein Ventilkörper in Form eines Ventilschiebers 79 in einem Ventilgehäuse 80 des Ventils 41 verschiebbar geführt, wobei diese verschiebbare Führung dabei quer zu einer Strömungsrichtung 81 von über das Ventil 41 führbarer Prozessflüssigkeit stattfindet. In einer in Fig. 10 gezeigten, ersten Stellung ist der Ventilschieber 79 unter Einwirkung des Auslöseelements 47 aus einem Ventilsitz 82 herausbewegt, wobei dies dabei entgegen einem Federelement 83 vorgenommen ist. Das Auslöseelement 47 ist dazu als angeschrägter Schiebesitz gestaltet, welcher bei Platzierung des Filterelements 12 in der Einbauposition in eine Betätigungsöffnung 84 des Ventilschiebers 79 einfasst und hierdurch durch seine Anschrägung das Verschieben des Ventilschiebers 79 entgegen dem Federelement 83 in die erste Stellung hervorruft. Dabei wird eine erste Schaltstellung des Ventils 41 verwirklicht, in welcher ein Strömen von Prozessflüssigkeit von einem Zulauf 85 des Ventils 41 zu einem Ablauf 86 und damit im Weiteren auch in eine Zufuhröffnung 87 des Filterelements 12 stattfinden kann, an welcher das Auslöseelement 47 vorgesehen ist. Über den Zulauf 85 ist dabei eine Verbindung zu der - vorliegend nicht gezeigten - Zuführung der Filtereinrichtung hergestellt.

Wird das Filterelement 12 hingegen aus seiner Einbauposition entnommen, so sorgt das Federelement 83 für ein Verschieben des Ventilschiebers 79 in den Ventilsitz 82 und damit in eine zweite Stellung, durch welche auch eine zweite Schaltstellung des Ventils 41 repräsentiert ist. Dabei trennt der Ventilschiebers 79 dann den Zulauf 85 von dem Ablauf 86, wodurch auch ein Strömen von Prozessflüssigkeit über das Ventil 41 unterbunden wird.

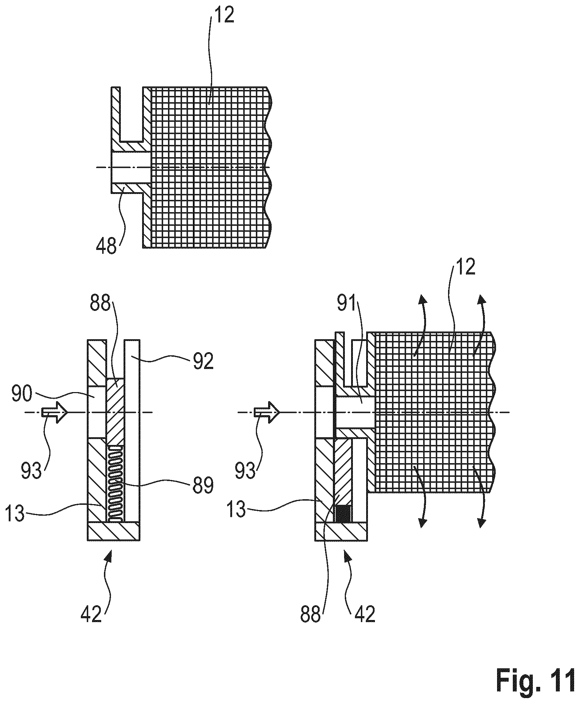

Schließlich ist noch der in Fig. 11 gezeigte Aufbau des Ventils 42 ähnlich zu der Variante nach Fig. 10 gestaltet, mit dem Unterschied, dass ein Ventilschieber 88 des Ventils 42 über das Auslöseelement 48 dadurch entgegen einem Federelement 89 verschoben wird, indem das Auslöseelement 48 gemeinsam mit dem Filterelement 12 von oben seitens der Filteraufnahme 13 eingelegt wird. Hierdurch wird der Ventilschieber 88 aus einer Stellung, welche in Fig. 11 in der linken Ansicht gezeigt ist und eine Schaltstellung des Ventils 42 repräsentiert, in eine andere Stellung verschoben, die in Fig. 11 in der rechten Ansicht dargestellt und einer anderen Schaltstellung des Ventils 42 zugeordnet ist. In der anderen Stellung gibt der Ventilschieber 88 dabei einen Ablauf 90 frei, wodurch Prozessflüssigkeit aus dem Ablauf und damit aus der hiermit verbundenen Zuführung in eine Zufuhröffnung 91 des Filterelements 12 einströmen kann. Im Bereich des Ventils 42 sind zudem Führungen 92 ausgestaltet, an welchen das Filterelement 12 beim Einlegen in die Einbauposition beidseitig geführt wird. Die Verschiebung des Ventilschiebers 88 findet dabei quer zu einer Strömungsrichtung 93 der Prozessflüssigkeit statt.

Mittels der erfindungsgemäßen Ausgestaltungen eines Filtersystems eines Wäschebehandlungsgerät kann somit jeweils eine sachgerechte Verwendung einer Filtereinrichtung gewährleistet werden.

### Bezugszeichenliste:

- 1: Wäschebehandlungsgerät
- 2: Gerätegehäuse
- 3: Trommel
- 4: Zulaufleitung
- 5: Einspülschale
- 6: Ablaufleitung
- 7: Pumpe
- 8: Filtersystem
- 9: Abwasseranschluss
- 10: Filtereinrichtung
- 11: Filtergehäuse
- 12: Filterelement
- 13: Filteraufnahme
- 14: Zuführung
- 15: Abführung
- 16: Ablaufanschluss
- 17: Ablaufschlauch
- 18: Ventil
- 19: Ventilkörper
- 20: Strömungsrichtung
- 21: Ventilgehäuse
- 22: Federelement
- 23: Ventilsitz
- 24: Auslöseelement
- 25: Zufuhröffnung
- 26: Stege
- 27: Dichtelement
- 28: Flansch
- 29: Ablauf
- 30: Pfeil
- 31: Dichtelement
- 32: Wäschebehandlungsgerät
- 33: Filtersystem
- 34: Filtergehäuse
- 35: Ablaufleitung
- 36: Ablaufanschluss
- 37: Ventil
- 38: Ventil
- 39: Ventil
- 40: Ventil
- 41: Ventil
- 42: Ventil
- 43: Auslöseelement
- 44: Auslöseelement
- 45: Auslöseelement
- 46: Auslöseelement
- 47: Auslöseelement
- 48: Auslöseelement
- 49: Ventilkörper
- 50: Ventilgehäuse
- 51: Ventilsitz
- 52: Zulauf
- 53: Ablauf
- 54: Dichtelement
- 55: Zufuhröffnung
- 56: Strömungsrichtung
- 57: Dichtelement
- 58: Ventilkörper
- 59: Ventilgehäuse
- 60: Zulauf
- 61: Ablauf
- 62: Durchbruch
- 63: Zufuhröffnung
- 64: Ventilkörper
- 65: Ventilgehäuse
- 66: Durchbruch
- 67: Zulauf
- 68: Ablauf
- 69: Zufuhröffnung
- 70: Ventilkolben
- 71: Ventilgehäuse
- 72: Strömungsrichtung
- 73: Federelement
- 74: elastisches Element
- 75: Zulauf
- 76: Ablauf
- 77: Betätigungsöffnung
- 78: Zufuhröffnung
- 79: Ventilschieber
- 80: Ventilgehäuse
- 81: Strömungsrichtung
- 82: Ventilsitz
- 83: Federelement
- 84: Betätigungsöffnung
- 85: Zulauf
- 86: Ablauf
- 87: Zufuhröffnung
- 88: Ventilschieber
- 89: Federelement
- 90: Ablauf
- 91: Zufuhröffnung
- 92: Führungen
- 93: Strömungsrichtung

## Patentansprüche

1. Filtereinrichtung (10) für ein Filtersystem (8; 33) eines Wäschebehandlungsgeräts (1; 32), umfassend eine Filteraufnahme (13) und mindestens ein Filterelement (12), welches an der Filteraufnahme (13) in einer Einbauposition lösbar platzierbar ist und einem Filtern von Flüssigkeit dient, wobei die Filteraufnahme (13) mindestens einen Durchgang aufweist, über welchen bei Platzierung des mindestens einen Filterelements (12) in der Einbauposition jeweils Flüssigkeit mit dem mindestens einen Filterelement (12) austauschbar ist, **dadurch gekennzeichnet, dass** ein jeweiliger Austausch von Flüssigkeit zwischen dem mindestens einen Durchgang und dem mindestens einen Filterelement (12) über je ein zwischenliegendes Ventil (18; 37; 38; 39; 40; 41; 42) erfolgt, welches jeweils untrennbar an der Filteraufnahme (13) befestigt ist, dass das je eine Ventil (18; 37; 38; 39; 40; 41; 42) bei Platzierung des mindestens einen Filterelements (12) in der Einbauposition je einen ersten Schaltzustand einnimmt, in welchem ein Strömen von Flüssigkeit über das je eine Ventil (18; 37; 38; 39; 40; 41; 42) darstellbar ist, und dass das je eine Ventil (18; 37; 38; 39; 40; 41; 42) bei Entnahme des mindestens einen Filterelements (12) aus der Einbauposition selbsttätig je einen zweiten Schaltzustand einnimmt, in dem ein Strömen von Flüssigkeit über das je eine Ventil (18; 37; 38; 39; 40; 41; 42) unterbunden ist.

2. Filtereinrichtung (10) nach Anspruch 1, **dadurch gekennzeichnet, dass** dem je einen Ventil (18; 37; 38; 39; 40; 41; 42) jeweils ein Auslöseelement (24; 43; 44; 45; 46; 47; 48) zugeordnet ist, welches an dem mindestens einen Filterelement (12) vorgesehen ist, wobei das jeweils ein Auslöseelement (24; 43; 44; 45; 46; 47; 48) bei Platzierung des mindestens einen Filterelements (12) in der Einbauposition mit dem je einen Ventil (18; 37; 38; 39; 40; 41; 42) in Kontakt tritt und das je eine Ventil (18; 37; 38; 39; 40; 41; 42) dabei aus dem je einen zweiten Schaltzustand in den je einen ersten Schaltzustand überführt.

3. Filtereinrichtung (10) nach Anspruch 1 oder 2, **dadurch gekennzeichnet, dass** das je eine Ventil (18; 37; 41; 42) jeweils einen Ventilkörper (19; 49) aufweist, welcher zwischen je einer ersten, dem je einen ersten Schaltzustand zugeordneten Stellung und je einer zweiten, dem je einen zweiten Schaltzustand zugeordneten Stellung bewegbar ist, wobei der jeweils eine Ventilkörper (19; 49) in der zweiten Stellung das Strömen von Flüssigkeit über das je eine Ventil (18; 37; 41; 42) unterbindet, während in der je einen ersten Stellung des jeweils einen Ventilkörpers (19; 49) das Strömen von Flüssigkeit über das je eine Ventil (18; 37; 41; 42) darstellbar ist.

4. Filtereinrichtung (10) nach Anspruch 3, **dadurch gekennzeichnet, dass** der jeweils eine Ventilkörper (19) in Strömungsrichtung (20) von über das je eine Ventil (18) geführter Flüssigkeit zwischen der je einen ersten Stellung und der je einen zweiten Stellung bewegbar ist.

5. Filtereinrichtung (10) nach Anspruch 3, **dadurch gekennzeichnet, dass** die je eine erste Stellung des jeweils einen Ventilkörpers (49) hinsichtlich einer Strömungsrichtung (56) von über das je eine Ventil (37) geführter Prozessflüssigkeit seitlich versetzt zu der je einen zweiten Stellung liegt.

6. Filtereinrichtung (10) nach Anspruch 3, **dadurch gekennzeichnet, dass** der jeweils eine Ventilkörper je ein Ventilschieber (79; 88) ist, welcher quer zu einer Strömungsrichtung (81; 93) von über das je eine Ventil (41; 42) geführter Prozessflüssigkeit zwischen der je einen ersten Stellung und der je einen zweiten Stellung verschiebbar ist.

7. Filtereinrichtung (10) nach Anspruch 1 oder 2, **dadurch gekennzeichnet, dass** das je eine Ventil (38; 39) jeweils einen Ventilkörper (58; 64) aufweist, der mit je einem Durchbruch (62; 66) durchsetzt ist, wobei der jeweils eine Ventilkörper (58; 64) zwischen je einer ersten, dem je einen ersten Schaltzustand zugeordneten Stellung und je einer zweiten, dem je einen zweiten Schaltzustand zugeordneten Stellung verdrehbar ist, und wobei der jeweils eine Ventilkörper (58; 64) einen Zulauf (60; 67) und einen Ablauf (61; 68) des je einen Ventils (38; 39) in der je einen zweiten Stellung voneinander trennt und hierdurch das Strömen von Flüssigkeit über das je eine Ventil (38; 39) unterbindet, wohingegen der je eine Durchbruch (62; 66) des jeweils einen Ventilkörpers (58; 64) in der je einen ersten Stellung mit dem Zulauf (60; 67) und dem Ablauf (61; 68) in Überdeckung gebracht und dadurch das Strömen von Flüssigkeit über das je eine Ventil (38; 39) darstellbar ist.

8. Filtereinrichtung (10) nach Anspruch 1 oder 2, **dadurch gekennzeichnet, dass** das je eine Ventil (40) jeweils einen Ventilkolben (70) aufweist, der zwischen je einer ersten, dem je einen ersten Schaltzustand zugeordneten Stellung und je einer zweiten, dem je einen zweiten Schaltzustand zugeordneten Stellung verschiebbar ist, wobei der jeweils eine Ventilkolben (70) in der je einen zweiten Stellung auf je ein elastisches Element (74) des je einen Ventils (40) drückt, welches sich dadurch elastisch verformt, wobei das je ein elastisches Element (74) in dem verformten Zustand einen Zulauf (75) und einen Ablauf (76) des je einen Ventils (40) voneinander trennt und hierdurch das Strömen von Flüssigkeit über das je eine Ventil (40) unterbindet, wohingegen der Zulauf (75) und der Ablauf (76) in einem unverformten Zustand des je einen elastischen Elements (74) miteinander verbunden sind und dadurch das Strömen von Flüssigkeit über das je eine Ventil (40) darstellbar ist.

9. Filtereinrichtung (10) nach einem der vorhergehenden Ansprüche, **dadurch gekennzeichnet, dass** der mindestens eine Durchgang je eine Zuführung (14) ist, über welche dem mindestens einen Filterelement (12) zu filternde Flüssigkeit über das je eine zwischenliegende Ventil (18; 37; 38; 39; 40; 41; 42) zuführbar ist.

10. Filtereinrichtung nach einem der vorhergehenden Ansprüche, **dadurch gekennzeichnet, dass** der mindestens eine Durchgang je eine Abführung ist, über welche von dem mindestens einen Filterelement gefilterte Flüssigkeit über das je eine zwischenliegende Ventil abführbar ist.

11. Filtereinrichtung nach Anspruch 9 und nach Anspruch 10, **dadurch gekennzeichnet, dass** an der Filteraufnahme sowohl an der je einen Zuführung, als auch an der je einen Abführung jeweils je ein Ventil untrennbar befestigt ist.

12. Filtersystem (8; 33) eines Wäschebehandlungsgeräts (1; 32), umfassend eine Filtereinrichtung (10) nach einem oder mehreren der Ansprüche 1 bis 11, wobei die Filtereinrichtung (10) in einem Ablaufsystem angeordnet ist, über welches Prozessflüssigkeit aus dem Wäschebehandlungsgerät (1; 32) abführbar ist.

13. Filtersystem (8) nach Anspruch 12, **dadurch gekennzeichnet, dass** die Filtereinrichtung (10) in einem Gerätegehäuse (2) des Wäschebehandlungsgeräts (1) aufgenommen ist.

14. Filtersystem nach Anspruch 13, **dadurch gekennzeichnet, dass** die Filtereinrichtung an oder in einer Einspülschale des Wäschebehandlungsgeräts aufgenommen ist.

15. Filtersystem (33) nach Anspruch 12, **dadurch gekennzeichnet, dass** die Filtereinrichtung (10) außenliegend zu einem Gerätegehäuse (2) des Wäschebehandlungsgeräts (32) angeordnet ist.
